# EUROPEAN PATENT SPECIFICATION

(11) **EP 1 747 396 B1**
(45) Date of publication and mention of the grant of the patent: **05.12.2007**
(21) Application number: 05732584.7
(22) Date of filing: 07.04.2005
(51) Int. Cl.: F16L 23/032, F16L 23/02, F01N 7/08, F16L 21/06, F01N 7/18

(54) **INTERLOCKING FLANGE FOR AN EXHAUST SYSTEM**
VERRIEGELUNGSFLANSCH FÜR EIN ABGASSYSTEM
BRIDE DE VERROUILLAGE POUR UN SYSTÈME D'ÉCHAPPEMENT

(30) Priority: 19.05.2004 US 849620
(43) Date of publication of application: 31.01.2007
(73) Proprietor: EMCON Technologies LLC, Wilmington DE 19801 (US)
(72) Inventor: COOK, Kenneth, E., Indianapolis, IN 46222 (US); HOUTSCHILT, Robert, W., Commerce Township, MI 48382 (US)
(74) Representative: Jones, John Bryn
(86) International application number: PCT/US2005/011840
(87) International publication number: WO 2005/116504

(56) References cited:
- WO-A-86/00971
- DE-A1- 2 529 138
- US-A- 3 515 416
- US-A- 5 314 215
- US-A- 5 765 881
- US-B1- 6 315 335

## Description

### BACKGROUND OF THE INVENTION

The present invention relates to an exhaust system, and more particularly to a symmetrical flange assembly, which may be utilized in multiple locations throughout the exhaust system to connect exhaust pipe sections.

Exhaust systems typically include several connected exhaust pipe sections. A flange on each exhaust pipe section commonly connects adjacent exhaust pipe sections, as seen in US5765881. The flanges are typically rectilinear plates with a circular aperture that receives an end of each exhaust pipe section. Typically, the flanges have been stamped from sheet metal. The flanges are welded onto ends of the exhaust pipe sections and the flanges are attached together with fasteners.

Due to size and strength requirements, the flanges may be expensive to manufacture. A large press has been required to stamp the flanges. The resulting, expense of the flange may be a large percentage of the overall exhaust system expense.

Accordingly, it is desirable to provide an inexpensive flange for an exhaust system.

### SUMMARY OF THE INVENTION

The exhaust system according to the present invention provides a flange assembly made from multiple flange portions. The flange portions may be formed of a powdered metal and may be identical. A flange portion formed from powdered metal may be manufactured by a less expensive manufacturing process than the prior art. The use of identical flange portions reduces the total number of parts that would otherwise be required to utilize varying flange portions.

The disclosed flange portions include steps at each peripheral edge. The steps are approximately one-half a nominal thickness of the flange portion. Preferably, two flange portions come together to form the flange assembly. The steps at the peripheral edges of each flange portion overlap with a corresponding peripheral edge from the other flange portion. The steps arranged in this overlapping relationship provide a reliable structure for properly positioning the flange portions on an exhaust pipe section.

The flange portions have a curved inner peripheral surface between the peripheral edges that extends beyond 180°. Thus, the steps will serve to hold and position the flange portions on the exhaust pipe section. Of course, it is possible the exhaust pipe section will have a shape other than circular, and the inner peripheral surface of the flange portions will be modified accordingly in such an instance.

The present invention therefore provides an inexpensive alternative to the prior art flange for an exhaust system.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a general exploded view of an exhaust system;
Figure 2 is a planar view of a flange portion of the present invention;
Figure 3 is a side view of the flange portion of the present invention; and
Figure 4 is an end view of a flange assembly attached to an exhaust pipe.

### DETAILED DESCRIPTION OF THE PREFERRED EMBODIMENT

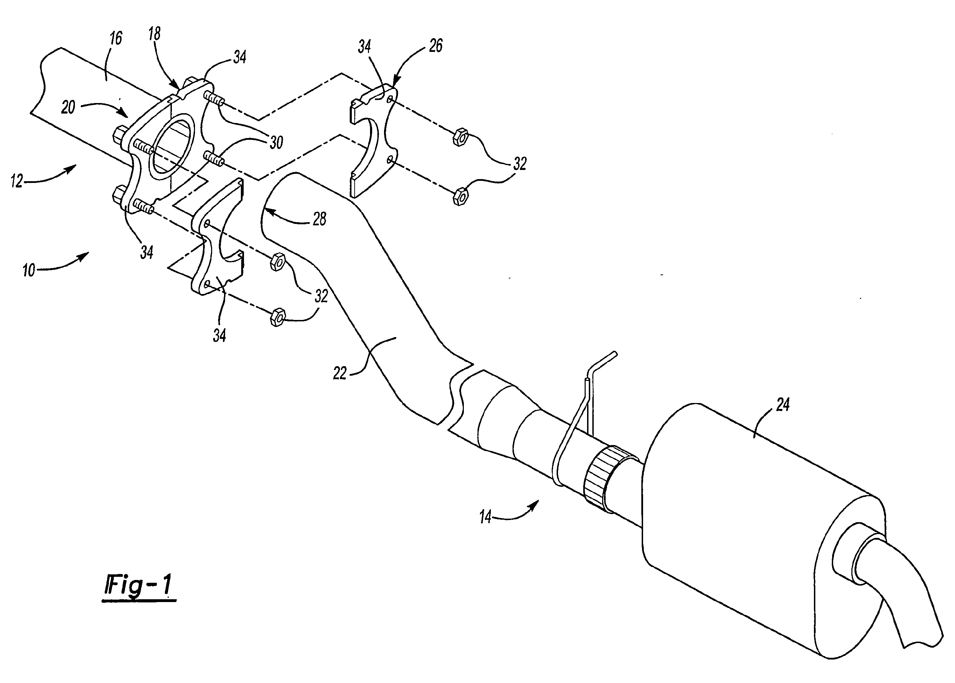

Figure 1 illustrates an exhaust system 10, including an exhaust pipe assembly 12 and a muffler assembly 14. It should be understood that although a particular component arrangement is disclosed in the illustrated embodiment, other exhaust systems will benefit from the instant invention.

The exhaust pipe assembly 12 includes an exhaust pipe 16 and a flange assembly 18 mounted to an end segment 20 of the exhaust pipe 16 such as through welding. The muffler assembly 14 includes a muffler exhaust pipe 22, a muffler 24, and a flange assembly 26 mounted to an end segment 28 of the muffler exhaust pipe 22 such as through welding. The flange assemblies 18, 26 are attached together through a fastener arrangement, such as bolts 30 and nuts 32. Other fasteners such as rivets can be utilized.

Each flange assembly 18, 26 is disclosed as being assembled from identical flange portions 34, and is manufactured of a powdered metal. Most preferably a stainless steel powdered metal is utilized, although other appropriate powdered metals could be utilized. Of course, each flange portion 34 is smaller than the assembled flange assembly 18, 26. Because of the smaller size and the powdered metal composition, the flange portions 34 may be manufactured by a lower tonnage press to thereby decrease manufacturing expense. That is, the flange portions 34 are more economical to produce than conventional one-piece flanges. Furthermore, because each flange portion 34 is identical, the part count per exhaust system 10 is not increased.

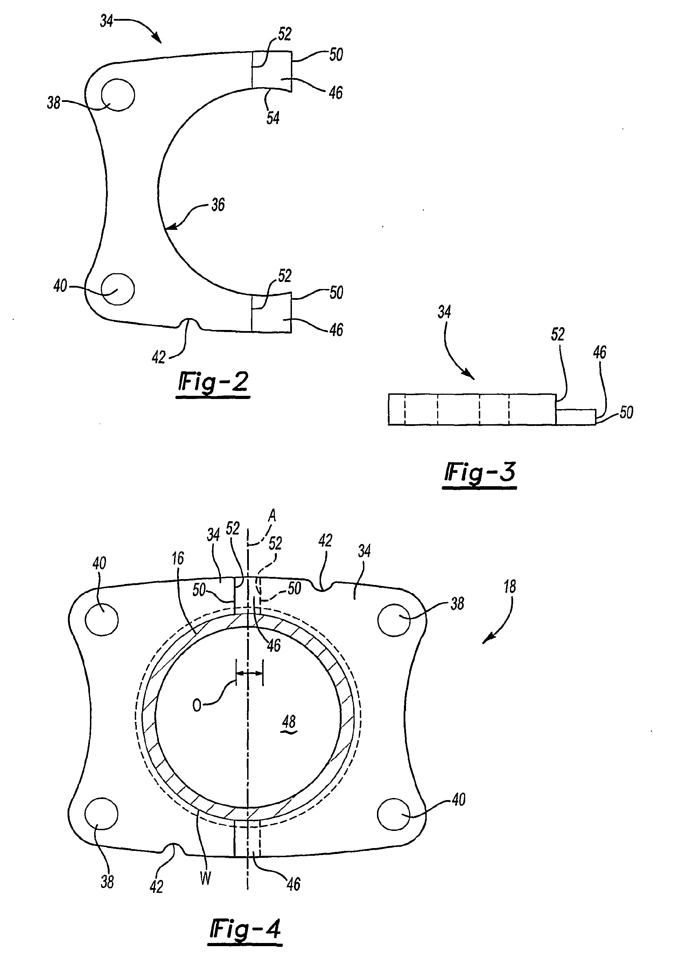

Referring to Figure 2, a single flange portion 34 is illustrated. Each flange portion 34 is generally rectilinear and defines a partial circular pipe aperture 36 and a pair of fastener apertures 38, 40. An index mark 42 is also preferably located along one side of the flange portion 34. The index mark 42 provides assembly identification and assists in orientation of each of the flange portions 34 in a welding jig (not shown).

As can be appreciated from Figures 2 and 3, each flange portion 34 has steps 46 that are approximately one-half the nominal thickness of the flange portion 34 at other locations. The steps 46 are formed at each peripheral edge 50 of the flange portion 34. As will be best understood from Figure 4, the steps 46 on two mating flange portions 34 assist in positioning and holding the flange portions 34 on the exhaust pipe 16.

Referring to Figure 4, the flange assembly 18 is illustrated in an assembled condition. Although only flange assembly 18 will be described with reference to Figure 4, it should be understood that the flange assembly 26 as well as other flange assemblies would be structured similarly.

Plane A is defined as bisecting an open end 48 of the exhaust pipe 16. One flange portion 34 is assembled on each side of the plane A such that the partial circular pipe apertures 36 from the two flange portions 34 form a complete aperture which surrounds the exhaust pipe 16. The steps 46 at each end surface 52 of each flange portion 34 are overlapped with mating steps 46 from the other flange portion 34. As can be appreciated, a curved inner peripheral surface 54, defined by the partial circular pipe aperture 36, extends beyond 180 . In this manner, the steps 46 cross the plane A, and thus have surfaces that will begin to curve back inwardly to catch each flange portion 34 on the exhaust pipe 16. That is, since the steps 46 extend beyond 180 , they will begin curving back in an opposed direction near the peripheral edges 50. This will assist in holding the flange portions 34 on the exhaust pipe 16.

The flange portions 34 are positioned within an appropriate welding jig, and held while being welded to the exhaust pipe 16. Preferably, a weld joint W secures the flange portions 34 to the exhaust pipe 16 about the entire circumference of the exhaust pipe 16. Of course, a partial weld joint may also be utilized. Notably, index mark 42 on each flange portion 34 is located diagonally transverse to each other relative to plane A. The index mark 42 on each flange portion 34 assists in properly positioning the flange portion 34 within the welding jig.

While the flange portions 34 are shown as fully surrounding the exhaust pipe 16, the present invention would extend to the use of multiple flange portions formed of powdered metal that do not necessarily fully surround the exhaust pipe 16. Moreover, while the two flange portions 34 that come together to define a flange assembly 18 are shown as identical, the present invention would also extend to flange assemblies formed of multiple flange portions that are not identical. In addition, while two flange portions 34 are shown as providing the flange assembly 18, more than two flange portions may also be utilized.

## Claims

1. An exhaust pipe assembly comprising: an exhaust pipe section (16) having an outer peripheral surface and extending between a first end and a second end; a first flange portion (34) mounted on said outer peripheral surface adjacent said first end; and a second flange portion (34) mounted on said outer peripheral surface adjacent said first end, **characterised in that** said first and second flange portions are formed of a powdered metal.

2. The exhaust pipe assembly as recited in claim 1, wherein said first flange portion (34) is identical to said second flange portion (34).

3. The exhaust pipe assembly as recited in claim 1, wherein said first flange portion and said second flange portion (34) completely surround said outer peripheral surface.

4. The exhaust pipe assembly as recited in claim 1, wherein each of said first and second flange portions have a nominal thickness with each of said first and second flange portions defining a curved inner peripheral surface (54) extending between peripheral edges (50), and wherein said first and second flange portions include steps (46) defined at each of said peripheral edges, said steps having a thickness that is less than said nominal thickness of said first and second flange portions.

5. The exhaust pipe assembly as recited in claim 4, wherein said peripheral edges (50) of each of said first and second flange portions are spaced by more than 180° about a central axis of said exhaust pipe section (16).

6. The exhaust pipe assembly as recited in claim 1, wherein said exhaust pipe section is connected to a muffler (24) at said second end.

7. An exhaust system comprising: a first exhaust pipe assembly (12) including a first exhaust pipe section (16) having a first outer peripheral surface and extending between a first end and a second end, a first flange assembly (18) having a first flange portion mounted on said first outer peripheral surface adjacent said first end of said first exhaust pipe section, and a second flange portion mounted on said first outer peripheral surface adjacent said first end of said first exhaust pipe section; a second exhaust pipe assembly including a second exhaust pipe section (22) having a second outer peripheral surface and extending between a first end and a second end, a second flange assembly (26) having a first flange portion mounted on said second outer peripheral surface adjacent said first end of said second exhaust pipe section, and a second flange portion mounted on said second outer peripheral surface adjacent said first end of said second exhaust pipe section; and wherein said first flange assembly is secured to said second flange assembly, and **characterised in that** said first and second flange portions of said first and second flange assemblies are manufactured from a powdered metal.

8. The exhaust system as recited in claim 7, wherein said first and second flange portions (34) of said first and second flange assemblies are identical.

## Patentansprüche

1. Abgasrohrbaugruppe, mit: einem Abgasrohrabschnitt (16), der eine äußere Umfangsfläche aufweist und sich zwischen einem ersten Ende und einem zweiten Ende erstreckt; einem ersten Flanschabschnitt (34), der an der äußeren Umfangsfläche benachbart des ersten Endes angebracht ist; und einem zweiten Flanschabschnitt (34), der an der äußeren Umfangsfläche benachbart des ersten Endes angebracht ist, **dadurch gekennzeichnet, dass** der erste und der zweite Flanschabschnitt aus einem Pulvermetall gebildet sind.

2. Abgasrohrbaugruppe nach Anspruch 1, wobei der erste Flanschabschnitt (34) mit dem zweiten Flanschabschnitt (34) identisch ist.

3. Abgasrohrbaugruppe nach Anspruch 1, wobei der erste Flanschabschnitt und der zweite Flanschabschnitt (34) die äußere Umfangsfläche vollständig umgeben.

4. Abgasrohrbaugruppe nach Anspruch 1, wobei der erste und der zweite Flanschabschnitt jeweils eine Nenndicke haben, wobei der erste und der zweite Flanschabschnitt jeweils eine bogenförmige innere Umfangsfläche (54) definieren, die sich zwischen Umfangsrändern (50) erstreckt, und wobei der erste und der zweite Flanschabschnitt Stufen (46) aufweisen, die jeweils an den Umfangsrändern ausgebildet sind, wobei die Stufen eine Dicke haben, die kleiner ist als die Nenndicke des ersten und des zweiten Flanschabschnitts.

5. Abgasrohrbaugruppe nach Anspruch 4, wobei die Umfangsränder (50) des ersten und des zweiten Flanschabschnitts jeweils um mehr als 180° voneinander beabstandet um eine Mittelachse des Abgasrohrabschnitts (16) herum angeordnet sind.

6. Abgasrohrbaugruppe nach Anspruch 1, wobei der Abgasrohrabschnitt an dem zweiten Ende an einen Schalldämpfer (24) angeschlossen ist.

7. Abgasanlage mit: einer ersten Abgasrohrbaugruppe (12) mit einem ersten Abgasrohrabschnitt (16), der eine erste äußere Umfangsfläche aufweist und sich zwischen einem ersten Ende und einem zweiten Ende erstreckt, einer ersten Flanschbaugruppe (18) mit einem ersten Flanschabschnitt, der an der ersten äußeren Umfangsfläche benachbart des ersten Endes des ersten Abgasrohrabschnitts angebracht ist, und einem zweiten Flanschabschnitt, der an der ersten äußeren Umfangsfläche benachbart des ersten Endes des ersten Abgasrohrabschnitts angebracht ist; einer zweiten Abgasrohrbaugruppe mit einem zweiten Abgasrohrabschnitt (22), der eine zweite äußere Umfangsfläche aufweist und sich zwischen einem ersten Ende und einem zweiten Ende erstreckt, einer zweiten Flanschbaugruppe (26) mit einem ersten Flanschabschnitt, der an der zweiten äußeren Umfangsfläche benachbart des ersten Endes des zweiten Abgasrohrabschnitts angebracht ist, und einem zweiten Flanschabschnitt, der an der zweiten äußeren Umfangsfläche benachbart des ersten Endes des zweiten Abgasrohrabschnitts angebracht ist; und wobei die erste Flanschbaugruppe an der zweiten Flanschbaugruppe befestigt ist, und **dadurch gekennzeichnet, dass** der erste und der zweite Flanschabschnitt der ersten und der zweiten Flanschbaugruppe aus einem Pulvermetall gefertigt sind.

8. Abgasanlage nach Anspruch 7, wobei der erste und der zweite Flanschabschnitt (34) der ersten und der zweiten Flanschbaugruppe identisch sind.

## Revendications

1. Ensemble de tuyau d'échappement comprenant : une section de tuyau d'échappement (16) ayant une surface périphérique externe et s'étendant entre une première extrémité et une seconde extrémité ; une première partie de bride (34) montée sur ladite surface périphérique externe adjacente à ladite première extrémité ; et une seconde partie de bride (34) montée sur ladite surface périphérique externe adjacente à ladite première extrémité, **caractérisé en ce que** les première et seconde parties de bride sont formées à partir d'un métal en poudre.

2. Ensemble de tuyau d'échappement selon la revendication 1, dans lequel ladite première partie de bride (34) est identique à ladite seconde partie de bride (34).

3. Ensemble de tuyau d'échappement selon la revendication 1, dans lequel ladite première partie de bride et ladite seconde partie de bride (34) entourent complètement ladite surface périphérique externe.

4. Ensemble de tuyau d'échappement selon la revendication 1, dans lequel chacune desdites première et seconde parties de bride a une épaisseur nominale avec chacune desdites première et seconde parties de bride définissant une surface périphérique interne incurvée (54) s'étendant entre des bords périphériques (50) et dans lequel lesdites première et seconde parties de bride comprennent des échelons (46) définies au niveau de chacun desdits bords périphériques, lesdits échelons ayant une épaisseur qui est inférieure à ladite épaisseur nominale desdites première et seconde parties de bride.

5. Ensemble de tuyau d'échappement selon la revendication 4, dans lequel lesdits bords périphériques (50) de chacune desdites première et seconde parties de bride sont espacés de plus de 180° autour d'un axe central de ladite section de tuyau d'échappement (16).

6. Ensemble de tuyau d'échappement selon la revendication 1, dans lequel ladite section de tuyau d'échappement est raccordée à un silencieux (24) au niveau de ladite seconde extrémité.

7. Système d'échappement comprenant : un premier ensemble de tuyau d'échappement (12) comprenant une première section de tuyau d'échappement (16) ayant une première surface périphérique externe et s'étendant entre une première extrémité et une seconde extrémité, un premier ensemble de bride (18) ayant une première partie de bride montée sur ladite première surface périphérique externe adjacente à ladite première extrémité de ladite première section de tuyau d'échappement, et une seconde partie de bride montée sur ladite première surface périphérique externe adjacente à ladite première extrémité de ladite première section de tuyau d'échappement ; un second ensemble de tuyau d'échappement comprenant une seconde section de tuyau d'échappement (22) ayant une seconde surface périphérique externe et s'étendant entre une première extrémité et une seconde extrémité, un second ensemble de bride (26) ayant une première partie de bride montée sur ladite seconde surface périphérique externe adjacente à ladite première extrémité et ladite seconde section de tuyau d'échappement, et une seconde partie de bride montée sur ladite seconde surface périphérique externe adjacente à ladite première extrémité de ladite seconde section de tuyau d'échappement ; et dans lequel ledit premier ensemble de bride est fixé sur ledit second ensemble de bride, et **caractérisé en ce que** les première et seconde parties de bride desdits premier et second ensembles de bride sont fabriquées à partir d'un métal en poudre.

8. Système d'échappement selon la revendication 7, dans lequel lesdites première et seconde parties de bride (34) desdits premier et second ensembles de bride sont identiques.
